# EUROPEAN PATENT APPLICATION

(11) **EP 1 429 006 A2**
(43) Date of publication of application: **16.06.2004**
(21) Application number: 03028217.2
(22) Date of filing: 09.12.2003
(51) Int. Cl.: F02D 9/02, F02M 31/135

(54) **Fuel supply apparatus**

(30) Priority: 09.12.2002 JP 2002356929
(71) Applicant: Hitachi, Ltd., Chiyoda-ku, Tokyo 101-8010 (JP)
(72) Inventor: Watanabe, Kenji, c/o Hitachi Ltd. Int.Prop Group, Chiyoda-ku, Tokyo 100-8220 (JP)
(74) Representative: Beetz & Partner Patentanwälte

(57) **Abstract**

The present invention relates to a fuel supply apparatus in which the controllability of the air flow-rate is simplified and can promote the reduction of harmful substances discharged from the engine (1).

An air control valve (32) is provided downstream of an electronic throttle valve (10) in an intake pipe (9). Air having passed through the electronic throttle valve (10) is caused to flow from a main passage of an intake pipe (9) to a bypass (39, 40) as the occasion demands by using the air control valve (32), and vaporized fuel is supplied from a combustion stabilizing device (13, 23) to the air allowed to flow to the bypass (39, 40). The quantity of air caused to flow to the bypass (39, 40) is controlled by the electronic throttle valve (10) in the state where the control valve (32) is closed.

## Description

### Background of the Invention

The present invention relates to a fuel supply apparatus for an internal combustion engine.

U.S. Patent No.5894832 discloses a fuel supply apparatus for assisting the vaporization of a fuel injected from an injection valve.

The apparatus is equipped with an usual injection valve provided near to an inlet port of each cylinder of the engine, a passage bypassing a throttle valve arranged upstream of the inlet port of the cylinder. The bypass has an Idle Speed Control valve (hereinafter referred to as an ISC valve). Further the bypass is equipped with another injection valve (the injection valve is called as "upstream injection valve" compared with above usual injection valve) for using at cold engine start and a heater for heating the fuel injected from the upstream injection valve.

At the cold start of the engine, the throttle valve is closed, the opening of the ISC valve is controlled to cause an intake air to flow in the bypass, and the heater turns on. The upstream fuel injection valve injects fuel toward the heater during the course of engine warm-up after the cold engine start so that the heater may assist the fuel vaporization. This way prevents the adhesion of fuel to the intake passage to promote the improvement in combustion.

Thereby the improvement in combustion during the cold engine start and the reduction (exhaust purification) in discharge quantity of harmful hydro-carbon are promoted.

In the above-described prior art, the quantity of air introduced into the bypass (the auxiliary air passage) from the upstream of the throttle valve has been controlled by ISC valve. However, the exhaust purification till the catalyst is activated is finished, and when air control of the ISC valve is switched to air control of the throttle valve (the ISC valve is gradually closed and the throttle valve is gradually opened, and the total air quantity necessary for the engine revolution is controlled by both the valves), the jump-up of the engine RPM tends to occur, affecting the emissions. The problem is occurred since the rates of changes of the opening areas of both valves at the time of opening-and-closing operation are different.

In addition, in the large displacement engine, since much air quantity is needed at the time of idling when the ignition retard is applied, the air flow rate becomes short in the conventional ISC valve, resulting in the necessity of using two or three of the conventional ISC valves. If the conventional ISC valves are formed to have a larger flow rate, the system becomes large-scaled, which leads to a problem in terms of the layout of the engine.

### Summary of the Invention

The object of the present invention is to provide a fuel supply apparatus in which the controllability of the air flow-rate is simplified and can promote the reduction of harmful substances discharged from the engine.

In order to achieve this object, a fuel supply apparatus of the present invention can be characterized so that a control valve and/or a bypass are provided downstream of a throttle valve in an intake pipe.

Further, the control valve may cause air having passed through the throttle valve to flow from a main passage of the intake pipe to the bypass by closing the main passage in response to the conditions of an internal combustion engine.

A device for assisting vaporization and/or supplying of a fuel can be provided at the bypass, wherein the fuel from the device can be supplied to the air caused to flow the bypass.

Further, the fuel supply apparatus can be characterized so that a bypass for sending vaporized fuel to an inlet port of each cylinder of an internal combustion engine is provided separately from a main passage of an intake pipe.

The inlet of the bypass can be opened downstream of a throttle valve of the intake pipe.

A control valve possible to close the main passage in response to the conditions of said engine can be provided downstream of the inlet of the bypass.

Under a state where the control valve closes the main passage, air may flow into the bypass and the air flow rate can be controlled by the throttle valve.

Further, a fuel supply apparatus according to the present invention can comprise an intake pipe for taking in air; a throttle valve provided in a main passage of the intake pipe to control an air flow rate; a first fuel-injection valve provided near to an inlet port of each cylinder or directly at the cylinder of an internal combustion engine; a control valve provided downstream of said throttle valve to close the main passage of the intake pipe in response to the conditions of said engine; a bypass bypassing the control valve to cause air to flow when said main passage is closed by the control valve; and/or a device for assisting vaporization of a fuel which can be provided at the bypass.

The device for assisting vaporization may have a second fuel-injection valve and/or a heater for heating fuel injected from said second fuel-injection valve.

At the time of the cold engine start (exhaust purification), the control valve can be closed to introduce air into the bypass. The fuel injected from the fuel injection valve provided at the bypass may be assisted in the vaporization with the heater. The vaporized fuel can be supplied to the neighborhood of the inlet port of each cylinder. After completion of the cold engine start, the control valve can be opened to introduce air into the main passage. Since the control of the air quantities can be carried out by a single throttle valve, the worsening of exhaust caused by the jump-up, of the engine RPM can be reduced considerably. Further, since the control of the air quantities can be carried out by a single throttle valve, a large flow-rate of air can be allowed to flow at the time of idling.

### Brief Description of the Drawings

FIG. 1 is a structural view of a system having a fuel supply apparatus mounted thereon according to the present invention.
FIG. 2 is a sectional view of the combustion stabilizing device.
FIG. 3 is a sectional view taken along line A-A of FIG. 2.
FIG. 4 is a sectional view taken along line B-B of FIG. 3.
FIG. 5 is an explanatory view of the state at the time of exhaust purification of the fuel supply apparatus according to the present invention.
FIG. 6 is an explanatory view of the state after completion of exhaust purification of the fuel supply apparatus according to the present invention.
FIG. 7 is a view showing the control method at the time of exhaust purification.

### Detailed Description of the Invention

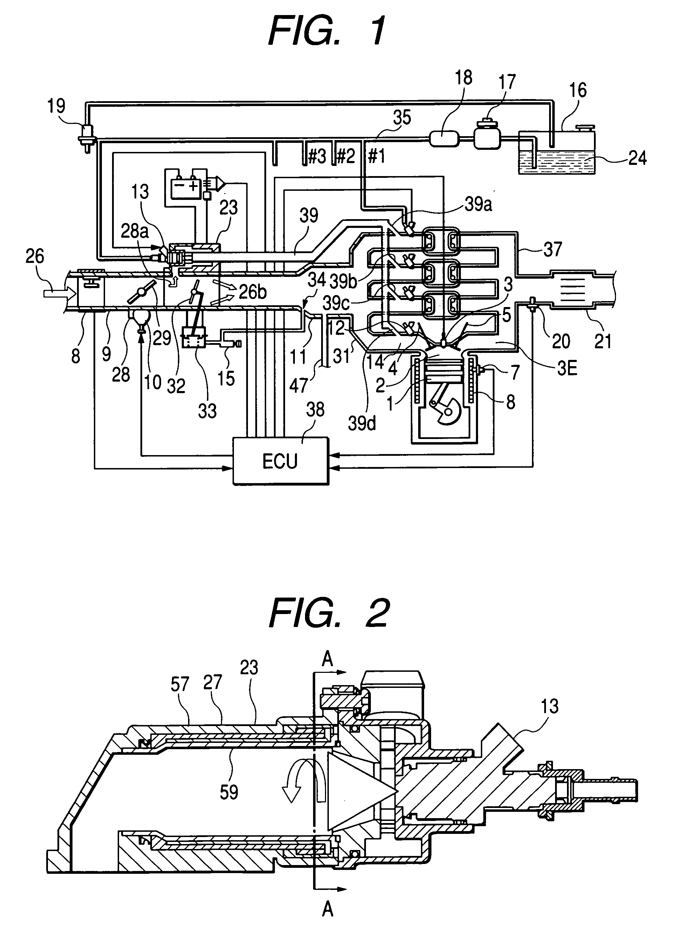

Preferred embodiments of the present invention will be described hereinafter with reference to the drawings. FIG. 1 is a configurational view of a system having a fuel supply apparatus of the present invention mounted thereon. It is noted that a known ignition type internal combustion engine using gasoline as fuel is shown here, and the structure of only one cylinder is shown.

In FIG. 1, the internal combustion engine 1 includes a combustion chamber (cylinder) 2, an ignition plug 3 arranged in the combustion chamber 2, an intake valve 4 for taking-in a mixture in which air and fuel are mixed, and an exhaust valve 5 for carrying out emission after combustion.

The internal combustion engine 1 is equipped with a water temperature sensor 7 for sensing a temperature of an engine coolant 6 and a rotation sensor (not shown) for sensing the engine RPM. A controller (ECU) 38 sequentially detects the operating conditions of the engine 1.

The intake system for carrying out the intake for the combustion chamber 2 includes an intake pipe 9, a mass air-low sensor 8 for measuring inlet air 26 inhaled passing through an air cleaner (not shown), an throttle valve 10 for controlling an intake air flow rate. The throttle valve 10 is fixed on a rotational shaft, and actuated electrically for opening and closing by electric actuator (motor) based on a signal of acceleration pedal operation or a signal of the operating conditions of the internal combustion engine 1. Furthermore, the intake system is includes a throttle positioning sensor 28, a control valve 32 provided downstream of the motor driven type throttle valve 10, a collector 11 and an EGR (Exhaust gas Recirculation) passage 47, an intake manifold 31 branched to each cylinder of the internal combustion engine 1 from the collector 11, and an inlet port 14 having an intake valve 4.

The flow-rate signal of the intake air 26 measured by the air flow sensor 8 and the opening signal of a valve member 29 of the electronic throttle valve 10 sensed by the throttle positioning sensor 28 are input into the controller 38, and are used for detection of the operating conditions of the internal combustion engine and for various controls.

The diameter of the control valve 32 is same as that of the valve member 29 of the electronic throttle valve 10.

An actuator of the control valve 32 is, for example, composed by a vacuum servo 33 and 3-way solenoid valve 15.

A vacuum 34 generated in the collector 11 is introduced into a vacuum servo 33 by controlling with a 3-way solenoid valve 15, thereby the vacuum servo 33 operates the control valve 32 to open and close the main passage of the intake pipe 9. The actuator of the control valve 32 may be replaced with a stepping motor type or a DC motor type.

The control valve 32 is controlled so as to close the main passage of the intake pipe 9 for reducing the exhaust emissions at the time of engine cold start described later. Further the control valve 32 may not be closed fully, but air 26b may be leaked toward the main passage.

The fuel injection device in the system is composed of a first fuel-injection valve 12 and a second fuel-injection valve 13. The first fuel-injection valve 12 is mounted to the inlet port 14 which is located downstream of the collector 11 so as to inject fuel toward the intake valve 4 of each cylinder. The second fuel-injection valve 13 constitutes a combustion stabilizing device (CSD) 23, which is mounted between a bypass 40 and a bypass 39. Both bypass 40 and 39 is connected together through the CSB 23.

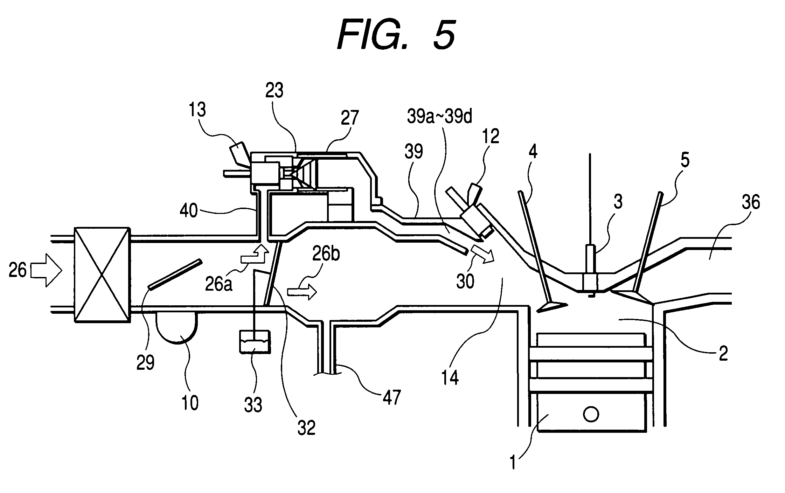

The inlet of the bypass 40 (see FIG. 5. Reference numeral of the inlet is omitted.) is located downstream of the electronic throttle valve 10 (throttle valve member) 29 and located upstream of the control valve 32. The combustion stabilizing device 23 will be described later with reference to FIGS. 2 to 4.

The bypass 40 (see FIG. 5) is provided upstream of the combustion stabilizing device 23, and the bypass 39 is provided downstream of the combustion stabilizing device 23 so as to introduce the fuel from the combustion stabilizing device 23 to the inlet port 14 of each cylinder. The combustion stabilizing device 23 is a device for assisting vaporization of the fuel. The outlet of the bypass 39 is connected with passages 39a to 39d branched toward the inlet port 14 of each cylinder.

A fuel system in the system comprises a fuel tank 16 for storing fuel 24, a fuel pump 17 for feeding under pressure the fuel 24 from the fuel tank 16, a fuel filter 18 for removing dust in the fed fuel 24, a pressure regulator 19 for regulating the pressure of the fed fuel 24 to a predetermined level, a first fuel injection valve 12 for injecting the fuel 24 to the inlet port 14 of each of the cylinders (#1, #2, ... ), a second fuel injection valve 13 for supplying the fuel 24 to intake air caused to flow in the bypass 39 of the downstream of the throttle valve member 29, and a fuel pipe 35 for connecting them.

An exhaust system in the system comprises an outlet port 36 in which the exhaust valve 5 of each cylinder is located, an exhaust manifold 37, an oxygen concentration sensor 20 for measuring an oxygen concentration in the exhaust, a three-way catalytic converter 21 for reducing (purifying) the exhaust emission, and a muffler (not shown). Information on an oxygen concentration measured by the oxygen concentration sensor 20 is input into the controller 30 for use in detection of the operating conditions of the internal combustion engine, and various control. The three-way catalytic converter 21 is designed so that NOx, CO, and HC discharged from the internal combustion engine operated in the vicinity of the theoretical air/fuel ratio are simultaneously purified with a high purification rate,

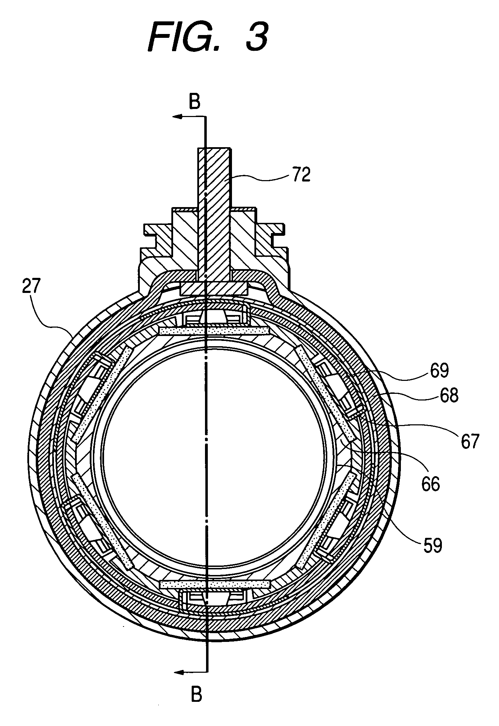

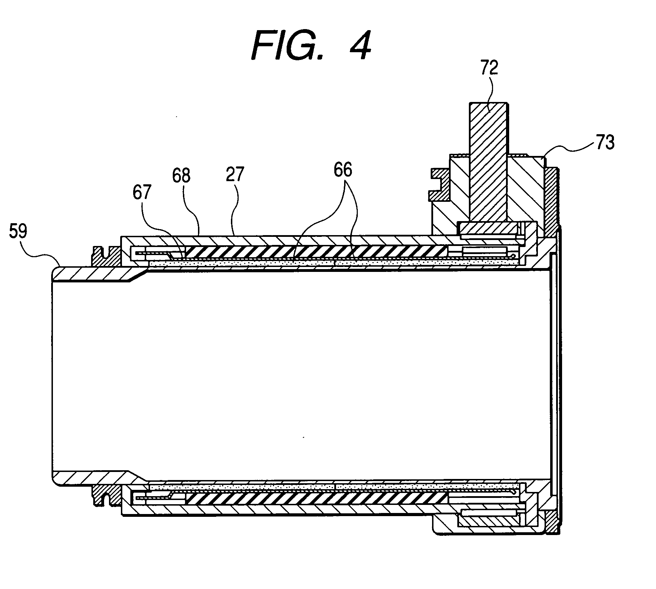

The combustion stabilizing device 23 will be described below. FIG. 2 is a sectional view, FIG. 3 is a sectional view taken along line A-A of FIG. 2, and FIG. 4 is a sectional view taken along line B-B of FIG. 3. In FIGS. 1 to 4, the combustion stabilizing device 23 is designed to take in air 26a which has been measured by the mass air-flow sensor 8 and has passed through the valve member 29 of the electronic throttle valve 10. The air 26a is introduced into the combustion stabilizing device 23 through the bypass 40 (see FIG. 5) by closing the control valve 32. The combustion stabilizing device 23 comprises the second fuel injection valve 13 and a heater 27 located to the injection direction of the second fuel injection valve 13.

The second fuel injection valve 13 is designed to inject the fuel toward the heater 27. The particle size of the fuel injected by the second fuel injection valve 13 has variations, including partly large particle size of the fuel. Fuel particles having the small particle size are carried by an air flow and allowed to flow into the combustion chamber 2 directly. On the other hand, the fuel particles having the large particle size are vaporized by the heater 27 and supplied to the combustion chamber 2. In the present embodiment, the fuel injected from the second fuel injection valve 13 is swirled as indicated by the arrow of FIG. 2 by air introduced through the bypass 40 (see FIG. 5), and the fuel having the large grain size is vaporized by the heater 27. Thereafter, that is, after having been vaporized by the heater 27, the fuel having large particle size is changed to the fuel having the small particle size, which passes through the bypass 39, and is then supplied to the combustion chamber 2 via each of the branched passage 39a to 39d. In this case, the outlets of the branched passages 39a to 39d are located at the upstream of the intake passage rather than the mounting position of the first fuel injection valve 12. With this, it is prevented that the fuel from the first fuel injection valve 12 stay at the outlets of the branched passages 39a to 39d.

The heater 27 is equipped with a tubular member 59 made of a conductive metal material mounted internally of the metal body 57. The tubular member 59 has a function as a bypass. Ceramic heaters (PTC: Positive Temperature Coefficient Thermistors) are arranged on the outer circumference of the tubular member 59 at equal intervals. Upper and lower plane portions of the PTC heaters 66 are electrode terminals, and an electric current is applied to the upper and lower electrode terminals whereby heat generation is performed. The PTC heater 66 is electrically connected to the outer circumference of the tubular member 59 which is a negative electrode terminal. Positive electrode terminal 67 which extends lengthwise along the PTC heater 66 is mounted on the outer circumference of the PTC heater 66. The positive electrode terminal 67 is connected at its end to the electrode terminal 69, and drawn externally from the outer mold 73 of the heater.

The positive electrode terminal 67 is held in the inner circumference of the thermal insulation cover 68. The tubular member 59 is in pressure contact with the metal body 57. The electrode terminal 69 is insulated from the electrode terminal 72 by the outer mold 73.

In the configuration described above, a mixture of the fuel 24 injected from the first fuel injection valve 12 and the second fuel injection valve 13 and the intake air 26 is taken into the combustion chamber 2. The mixture taken into the combustion chamber 2 is compressed and fired by the ignition plug 3 for combustion. After the combustion, the emissions discharged from the internal combustion engine 1 are discharged to the atmosphere through the exhaust system.

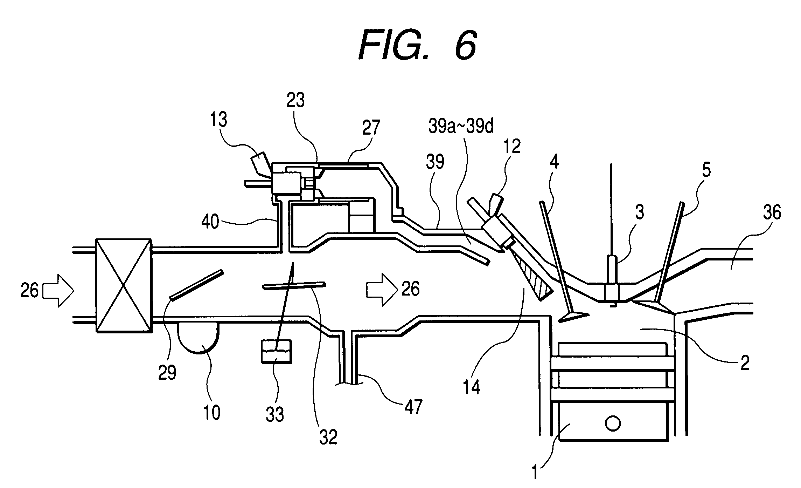

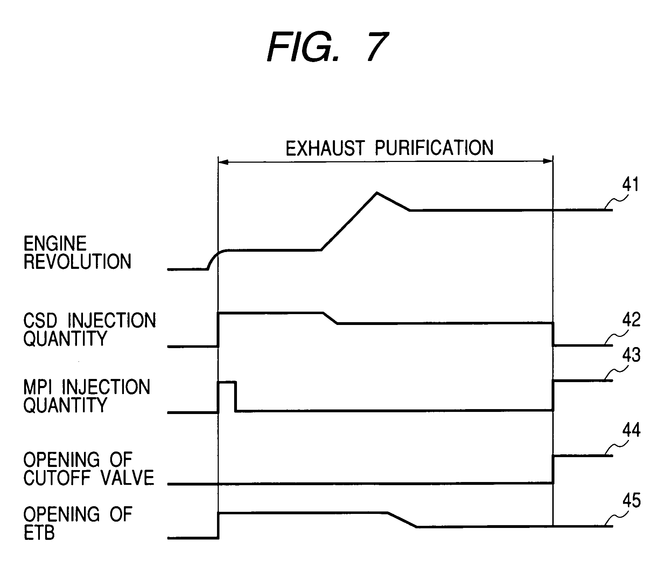

In the following, the state relating to the exhaust purification of the fuel supply apparatus according to the present invention will be described with reference to FIGS. 5 to FIG. 7. FIG. 5 is an explanatory view of the state at the time of exhaust purification, FIG. 6 is an explanatory vies of the state after completion of exhaust purification, and FIG. 7 is a view showing the control method at the time of exhaust purification.

The engine control at the time of exhaust purification is carried out by the engine control unit 38 (see FIG. 1). At the time of starting the engine (during the start of the cold engine), fuel is injected from the second fuel injection valve 13 of the combustion stabilizing device 23 simultaneously with the start-ON, and the vaporization of the injected fuel is assisted by the heater 27. Then, the vaporized fuel 30 is introduced into the inlet ports 14 from the bypass 39. But, since a transport delay of the fuel 30 injected from the combustion stabilizing device (device for assisting vaporization of the fuel) occurs, the all-cylinder injection is carried out also from the first fuel injection valves 12 of the MPI (Multi-Point Injection) only once at the time of start.

The control valve 32 is being closed during the exhaust purification at the cold engine start, and the intake air controlled by the electronic throttle valve (ETB) 10 is interrupted by the control valve 32 and introduced into the bypass 40. After completion of the exhaust purification, the control valve 32 is opened so that the intake air 26 controlled by the electronic throttle valve 10 is allowed to pass through the collector 11 from the main passage and introduced into the inlet port 14. Further, the injection of the section fuel injection valve 13 is switched to the injection of the first fuel injection valve 12.

In FIG. 7, reference numeral 41 designates the engine RPM. Reference numeral 42 designates fuel ejected from the second fuel injection valve 13 of the combustion stabilizing device 23. It is understood that the second fuel injection valve 13 is actuated at the time of exhaust purification. Reference numeral 43 designates fuel ejected from the first fuel injection valve 12. In the first fuel injection valve 12, injection is carried out once at the time of start during exhaust purification, and thereafter, it is actuated after the exhaust purification has been completed. Reference numeral 44 designates an opening degree of the control valve 32. It is understood that the control valve 32 is in a closed state during the exhaust purification. Reference numeral 45 designates an opening degree of the electronic throttle valve (ETB) 10. It is understood that the electronic throttle valve (ETB) 10 always carries out the air flow-rate control. When an operator has operated an acceleration pedal during a preset period of the cold engine start, the control of the exhaust purification mentioned above is not carried out.

In the system having the fuel supply apparatus of the present invention mounted thereon, the normal engine control after the warmed up the engine is performed such that the air control valve 32 is always opened, and the fuel injection is carried out by the first fuel injection valve 12. Further, the air flow-rate control is always carried out by the electronic throttle valve 10.

It is apparent that the present invention may be modified in various ways as long as the spirit of the invention is not changed.

As explained above, since the control of air flow-rate of the engine is carried out by a single throttle valve, it is possible to simplify the controllability as compared with the prior art. Further, the present invention can reduce the harmful substances discharged from the engine. Further, the present invention can prevent occurrence of a problem in terms of the engine layout.

## Claims

1. A fuel supply apparatus is **characterized in that** a control valve (32) and a bypass (39, 40) are provided downstream of a throttle valve (10) in an intake pipe (9); the control valve (32) causes air having passed through said throttle valve (10) to flow from a main passage of said intake pipe (9) to said bypass (39, 40) by closing the main passage in response to the conditions of an internal combustion engine (1); a device (13, 23) for assisting vaporization and supplying of a fuel is provided at said bypass (39, 40), wherein the fuel from the device (13, 23) is supplied to the air caused to flow to said bypass (39, 40).

2. A fuel supply apparatus is **characterized so that** a bypass (39, 40) for sending vaporized fuel (30) to an inlet port (14) of each cylinder (2) of an internal combustion engine (1) is provided separately from a main passage of an intake pipe (9); an inlet of said bypass (39, 40) is opened downstream of a throttle valve (10) of said intake pipe (9); a control valve (32) possible to close said main passage in response to the conditions of said engine (1) is provided downstream of the inlet of said bypass (39, 40); under a state where said control valve (32) closes said main passage, air flows into said bypass (39, 40) and the air flow rate is controlled by said throttle valve (10).

3. A fuel supply apparatus, comprising:
an intake pipe (9) for taking in air;
a throttle valve (10) provided in a main passage of said intake pipe (9) to control an air flow rate;
a first fuel-injection valve (12) provided near to an inlet port (14) of each cylinder (2) or directly at the cylinder (2) of an internal combustion engine (1);
a control valve (32) provided downstream of said throttle valve (10) to close said main passage of said intake pipe (9) in response to the conditions of said engine (1);
a bypass (39, 40) bypassing said control valve (32) to cause air to flow when said main passage is closed by said control valve (32); and
a device (13, 23) for assisting vaporization of a fuel provided at said bypass (39, 40) and having a second fuel-injection valve (13) and a heater (27) for heating fuel injected from said second fuel-injection valve (13).

4. The fuel supply apparatus according to at least one of the claims 1 to 3, wherein said control valve (32) is actuated with a vacuum.

5. The fuel supply apparatus according to at least one of the claims 1 to 3, wherein said control valve (32) is actuated with a motor.

6. The fuel supply apparatus according to at least one of the claims 1 to 5, wherein fuel injected from said second fuel-injection valve (13) is turned by said air allowed to flow to said bypass (39, 40).

7. The fuel supply apparatus according to at least one of the claims 1 to 6, wherein fuel is injected from said first fuel injection valve (12) during a period from the closing of said control valve (32) to the arrival of the fuel at said inlet port (14).

8. The fuel supply apparatus according to claim 7, wherein said first fuel injection valve (12) injects once for said period.

9. The fuel supply apparatus according to at least one of the claims 1 to 8, wherein said bypass (39, 40) is equipped with a plurality of branched passages (39a-d) communicated with respective combustion chambers (2).

10. The fuel supply apparatus according to claim 9, wherein said branched passages (39a-d) are connected to a position of the intake passage upstream of a main fuel injection valve (12) mounted to an inlet port (14).
